Europäisches Patentamt

European Patent Office

Office européen des brevets

(19)

(11) Veröffentlichungsnummer: **0 459 228 A2**

## (12) EUROPÄISCHE PATENTANMELDUNG

(21) Anmeldenummer: 91107892.1

(51) Int. Cl.5: **G11B 7/24**

(22) Anmeldetag: **16.05.91**

(30) Priorität: **29.05.90 DE 4017244**

(43) Veröffentlichungstag der Anmeldung:
**04.12.91 Patentblatt 91/49**

(84) Benannte Vertragsstaaten:
**DE FR GB IT**

(71) Anmelder: **BAYER AG**

**W-5090 Leverkusen 1 Bayerwerk(DE)**

(72) Erfinder: **Karbach, Alexander, Dr.**
**Scheiblerstrasse 81**
**W-4150 Krefeld(DE)**
Erfinder: **Pakull, Ralf, Dr.**
**Am Braunsacker 80**
**W 50000 Köln 71(DE)**
Erfinder: **Himmler, Thomas, Dr.**
**Bonhoefferstrasse 20**
**W-5000 Köln 80(DE)**

(54) **Herstellung optischer Speichermedien.**

(57) Gegenstand der vorliegenden Erfindung ist die Verwendung von transparenten, thermoplastischen Kunststoffen im Gemisch mit labilen Verbindungen zur Herstellung von einmal beschreibbaren optischen Speichermedien, ein Verfahren zur Herstellung von einmal beschreibbaren optischen Speichermedien und die nach diesem Verfahren erhältlichen optischen Speichermedien.

EP 0 459 228 A2

Gegenstand der vorliegenden Erfindung ist die Verwendung von transparenten, thermoplastischen Kunststoffen zur Herstellung von einmal beschreibbaren optischen Speichermedien, die dadurch gekennzeichnet ist, daß die transparenten, thermoplastischen Kunststoffe labile Verbindungen in Mengen von 0,1 Gew.-% bis 25 Gew.-%, vorzugsweise von 1 Gew.-% bis 15 Gew.-%, bezogen auf Gesamtgewicht an transparentem, thermoplastischem Kunststoff und labiler Verbindung, eingearbeitet enthalten, welche im Schmelzzustand der Kunststoffe unter der Einwirkung von energiereichen Strahlen, bevorzugt von Laserstrahlen oder von Elektronenstrahlen, im Kunststoff inerte Gase bilden.

Als inerte Gase sind solche Gase zu verstehen, die gegenüber den jeweiligen transparenten, thermoplastischen Kunststoffen, in denen sie jeweils gebildet werden, keine chemischen Reaktionen also insbesondere keine Schädigung oder keinen Abbau der Kunststoffe verursachen. Geeignete inerte Gase sind beispielsweise Kohlenwasserstoffe.

Geeignete thermoplastische Kunststoffe sind beispielsweise folgende thermoplatische Polymere nämlich Polyacrylnitril, Copolymere des Polyacrylnitrils mit anderen, copolymerisierbaren Vinylmonomeren, Polyamide, wie Polyamid 6, Polyamid 66 und Copolyamide, Polyester von Diolen und aromatischen Dicarbonsäuren, wie Polyethylenterephthalate, Polybutylenterephthalate und entsprechende Copolyester, Polyurethane, Polyolefine, wie Polyethylene, Polypropylene und entsprechende Copolyfine, aromatische Homopolycarbonate und aromatische Copolycarbonate, Polyacetale, aromatische Polysulfone, aromatische Polyethersulfone, Polyarylensulfinde, Vinylpolymerisate wie Polyvinylchloride und Copolymere von Vinylchlorid mit anderen copolymerisierbaren Vinylmonomeren, Polyalkylmethacrylate wie Polymethylmethacrylate und Copolymere des Methylmethacrylats mit anderen, copolymerisierbaren Vinylmonomeren, Polystyrole und Copolymere von Styrolen mit anderen copolymerisierbaren Vinylmonomeren, Polyvinylalkohole, aromatische Polyestercarbonate wie Poly-bisphenol-A-terephthalat-carbonate sowie aromatische Polyester, wie Poly-bisphenol-A-terephthalat iso-phthalate.

Diese thermoplastischen Kunststoffe sind literaturbekannt oder nach bekannten Verfahren herstellbar; sie sind durch die Wahl der Monomerbausteine und der jeweils im einzelnen leicht einzustellenden Molekulargewichte jeweils transparent und thermoplastisch verarbeitbar.

Ihre Einfriertemperatur soll mindestens $145°C$ oder mehr, vorzugsweise von $150°C$ bis $250°C$ betragen.

Labile Verbindungen im Sinne der vorliegenden Erfindung sind vorzugsweise organische Verbindungen, die monomer und polymer sein können.

Labile Verbindungen im Sinne der vorliegenden Erfindung sind beispielsweise folgende Substanzen, nämlich aliphatische Ether, die zu einer $\alpha,\beta$-Hydro-alkoxyeliminierung befähigt sind; quarternäre Ammoniumsalze, die zu einer $\alpha,\beta$-Hydro-tri-alkylmainoeliminierung befähigt sind; organische Schwefelverbindungen, die einer Cugaev-Reaktion unterliegen können; und schließlich Urethane, Kohlensäurester, Carbonsäureester und Aminooxide, die zu einer thermischen Eliminierung befähigt sind.

Erfindungsgemäß bevorzugte labile Verbindungen sind Carbonsäureester, die einer thermischen Eliminierung unterliegen können, beispielsweise Poly- oder Oligo-p-(carboxymethyl)-phenylen-co-p-(carboxy-tert.-butyl)-phenylen, Poly- oder Oligo-p-(carboxy-tert.-butyl-phenylen), Benzoesäure-tert.-butylester oder Dichlorbenzoesäuretert.-butylester.

Die erfindungsgemäß geeigneten labilen Verbindungen sind entweder literaturbekannt oder nach literaturbekannten Verfahren herstellbar.

Die Einarbeitung der erfindungsgemäß einzusetzenden, labilen Verbindungen in die transparenten, thermoplastischen Kunststoffe ist im Prinzip bekannt und kann beispielsweise dadurch erfolgen, daß man die transparenten, thermoplastischen Kunststoffe und die labilen Verbindungen in geeigneten, inerten Lösungsmitteln löst, die Lösungen gut miteinander vermischt und danach die Lösungsmittel schonend verdampft.

Geeignete inerte Lösungsmittel für die transparenten, thermoplastischen Kunststoffe sind solche, die die Kunststoffe weder chemisch beeinflussen noch abbauen. Sie sind für die jeweiligen Kunststoffe bekannt.

Geeignete inerte Lösungsmittel für die labilen Verbindungen sind solche, die die labilen Verbindungen weder chemisch beeinflussen noch abbauen. Sie sind für die jeweiligen labilen Verbindungen bekannt.

Bei der Einarbeitung der erfindungsgemäßen einzusetzenden labilen Verbindungen in die transparenten, thermoplastischen Kunststoffe können sogleich Formkörpner, vorzugsweise Folien oder Platten hergestellt werden, indem man beispielsweise die vereinigten Lösungen der transparenten, thermoplastischen Kunststoffe und der labilen Verbindungen zu Folien oder Platten in bekannter Weise vergießt.

Die Herstellung von Formkörpern, insbesondere von Folien oder Platten, kann aber auch nach Einarbeitung der labilen Verbindungen in die transparenten, thermoplastischen Kunststoffe erfolgen. Auch hierbei wird für die Herstellung der Folien oder Platten vorzugsweise das Gießverfahren verwendet, wobei geeignete, inerte Lösungsmittel für das Gießverfahren, z.B. Methylenchlorid und/oder Chlorbenzol sind.

Die Einwirkung von energiereicher Strahlung auf die Kunststofformkörper mit dem erfindungsgemäßen Gehalt an labilen Verbindungen erfolgt beispielsweise, indem man die Kunststofformkörper mit Laser- oder Elektronenstrahlen bestrahlt.

Erfindungsgemäß bevorzugte, energiereiche Strahlen sind Laserstrahlen oder Elektronenstrahlen, deren Erzeugung und Handhabung dem Fachmann geläufig sind.

Gegenstand der vorliegenden Erfindung ist somit außerdem ein Verfahren zur Herstellung von einmal beschreibbaren optischen Speichermedien aus thermoplastischen Kunststoffen, das dadurch gekennzeichnet ist, daß man transparente, thermoplastische Kunststoffe mit einem Gehalt an labilen Verbindungen in Mengen von 0,1-25 Gew.-%, vorzugsweise von 1 bis 15 Gew.-%, bezogen auf Gesamtgewicht an transparentem, thermoplastischem Kunststoff und labiler Verbindung, in Form von beliebigen Kunststofformkörpern, vorzugsweise in Form von Platten oder Folien, mit energiereichen Strahlen, vorzugsweise mit Laserstrahlen oder mit Elektronenstrahlen, in Form der gewünschten Speicherung bestrahlt.

Die hierbei lokal erzielten Temperaturen müssen ausreichen, daß einerseits der jeweilige transparente, thermoplastische Kunststoff lokal genügend weich geschmolzen ist, und daß andererseits die jeweilige eingearbeitete labile Verbindung das inerte Gas abspaltet. Somit sind gewisse Kombinationen von transparenten, thermoplastischen Kunststoffen mit labilen Verbindungen bevorzugt. Derartige Kombinationen sind beispielsweise thermoplastische Polycarbonate mit den erfindungsgemäß bevorzugten, labilen Verbindungen, die auf Seite 3 genannt sind.

Gegenstand der vorliegenden Erfindung sind auch die nach dem erfindungsgemäßen Verfahren erhältlichen beschriebenen, optischen Speichermedien. Diese beschriebenen optischen Speichermedien lassen sich nicht ein zweites Mal beschreiben.

Die erfindungsgemäß erhältlichen, beschriebenen optischen Speichermedien lassen sich beliebig häufig auslesen.

Optische Speichermedien im Sinne der vorliegenden Erfindung sind beispielsweise Disketten, Karten oder Mikrofiches.

Einmal beschreibbare und beliebig häufig lesbare optische Speichermedien sind bekannt (siehe beispielsweise G. Kämpf, Ber. Bunsenges. Phys. Chem. 89, 1179-1190 (1985)). Der Aufbau derartiger optischer Speichermedien ist jedoch bislang recht kompliziert. Sie basieren auf dem Prinzip der Farbänderung durch eine photochemische Reaktion. Diese bislang bekannten einmal beschreibbaren optischen Speichermedien sind jedoch in Auflösung und Lagerstabilität den erfindungsgemäßen, optischen Speichermedien unterlegen, da der zur Photoreaktion befähigte Bestandteil sich im Kunststoff aufgrund von Diffusionsvorgängen bewegen kann. Dies ist in den erfindungsgemäßen optischen Speichermedien nicht zu beobachten.

Auch mehrmals beschreibbare, d.h. löschbare optische Speichermedien, sind bekannt (vgl. Magneto-optische Disk). Diese Systeme weisen einen komplizierten mehrschichtigen Aufbau auf. Auch ist die erforderliche Aufnahme- und Abspielvorrichtung entsprechend aufwendig (Schreiblaser, Leserlaser und Magnet). Die erfindungsgemäßen optischen Speichermedien zeichnen sich dagegen durch einen einfachen Aufbau und geringe Herstellungskosten aus. Die erforderliche Aufnahme- und Abspielvorrichtung kann einfacher als bei den o.a. Magnet-optischen Disks gestaltet werden (z.B. Schreiblaser und Leselaser).

Bei den bisher billigsten optischen Aufzeichnungsmedien Compact-Disk (CD) ist ein komplizierter Vervielfältigungsvorgang nötig (Doppelbrechungsarmer Spritzguß, gute Pitabformung usw.). Ein weiterer Nachteil ist der nötige Schutz von mechanischer Verletzung der Pits.

Die erfindungsgemäßen Speichermedien können durch einfaches Beschreiben in einem Aufzeichnungsgerät vervielfältigt werden. Ein mechanischer Schutz der eingeschriebenen Informationen ist unnötig, da die Speicherung innerhalb des Speichermediums und nicht wie bei CD auf der Oberfläche erfolgt, die daher nachträglich geschützt werden muß.

Die erfindungsgemäße Herstellung der optischen Speichermedien ist zudem denkbar einfach. Zum Einschreiben wird der Kunststofformkörper mittels energiereicher Strahlen gemäß dem erfindungsgemäßen Verfahren lokal erwärmt und es werden dadurch lokal begrenzt durch Gasbildung Poren im Kunststofformkörper gebildet und somit die Transparenz des jeweils bestrahlten Bereiches im Kunststofformkörper aufgehoben und dabei gleichzeitig die gewünschte Information in das Speichermedium, den thermoplastischen Kunststofformkörper, eingelesen.

Das Auslesen der gespeicherten Informationen geschieht zerstörungsfrei mit Licht in bekannter, einfacher Weise und kann beliebig oft erfolgen, beispielsweise indem man mit einem Laser geringer Leistung unter Ausnutzung des geänderten Lichtstreuverhaltens die Information ausliest.

Die nach dem erfindungsgemäßen Verfahren erhältlichen optischen Speichermedien, sind technisch einsatzbar zur Aufnahme und Wiedergabe von Musik und/oder Computerdaten (binäre Daten) und/oder alphanumerischer Daten (Mikrofiches).

Beispiele

Beispiel 1

15 g Bisphenol-A Polycarbonat wurden in 100 ml Methylenchlorid gelöst. Dazu wurde eine Lösung von 3 g Poly-(p-(carboxymethyl)-phenylen-co-p-(carboxy-tert.-butyl)-phenylen) gegeben. Die vereinigten Lösungen wurden auf ein Volumen von ca. 10-20 ml eingeeingt. Auf einer Filmziehbank konnte eine transparente Folie gezogen werden.

In einem Vergleichsbeispiel wurde eine Folie aus Bisphenol-A Polycarbonat gezogen. Die Folien wurden vor der Elektronenbestrahlung mit einer ca. 1 nm dünnen Lage Gold besputtert.

In einem Rasterelektronenmikroskop (Philips SEM 501) wurde mit einem Elektronenstrahl mit einer Beschleunigungsspannung von 30 kV, Spot 2000, 2 ms Linetime, 500 Zeilen und mit 10 Durchgängen in beide Folien ein Rechteck mit den Kantenlängen 25x15 $\mu$m$^2$ eingeschrieben. Im Lichtmikroskop können in beiden Fällen die Rechtecke beobachtet werden. Bei der Vergleichsfolie konnte das Rechteck durch mechanische Beschädigung zerstört werden, während im Falle der Mischung das Rechteck auch nach mechanischer Beschädigung der Oberfläche der Folie im Lichtmikroskop sichtbar blieb.

Beispiel 2

15 g Bisphenol-A/1,1-Bis(4-hydroxyphenyl)-3,3,5-trimethyl-cyclohexan (45/55) Polycarbonat wurden in 100 ml Methylenchlorid gelöst. Dazu wurde eine Lösung von 3 g Poly-(p-(carboxymethyl)-phenylen-co-p-(carboxy-tert.-butyl)-phenylen) gegeben. Die vereinigten Lösungen wurden auf ein Volumen von ca. 10-20 ml eingeengt. Auf einer Filmziehbank konnte eine transparente Folie gezogen werden.

In einem Vergleichsbeispiel wurde eine Folie aus Bisphenol-A/1,1-bis-(4-hydroxyphenyl)-3,3,5-trimethyl-cyclohexan (45/55) Polycarbonat gezogen. Die Folien wurden vor der Elektronenbestrahlung mit einer ca. 1 nm dünnen Lage Gold besputtert.

In einem Rasterelektronenmikroskop (Philips SEM 501) wurde mit einem Elektronenstrahl mit einer Beschleunigungsbestrahlung von 30 kV, Spot 2000, 2 ms Linetime, 500 Zeilen und mit 10 Durchgängen in beide Folien ein Rechteck mit den Kantenlängen 25x15 $\mu$m$^2$ eingeschrieben. Im Lichtmikroskop können in beiden Fällen die Rechtecke beobachtet werden. Bei der Vergleichsfolie konnte das Rechteck durch mechanische Beschädigung zerstört werden, während im Falle der Mischung das Rechteck auch nach mechanischer Beschädigung der Oberfläche im Lichtmikroskop sichtbar blieb.

Beispiel 3

15 g aromatisches Polyestercarbonat mit 80 Gew.% Terephthalsäuregruppen und Isophthalsäuregruppen wurden in 100 ml Methylenchlorid gelöst. Dazu wurde eine Lösung von 3 g Poly-(p-(carboxymethyl)-phenylen-co-p-(carboxytert.-butyl)-phenylen) gegeben. Die vereinigten Lösungen wurden auf einem Volumen von ca. 10-20 ml eingeengt. Auf einer Filmziehbank konnte eine transparente Folie gezogen werden.

In einem Vergleichsbeispiel wurde eine Folie aus aromatischen Polyestercarbonat mit 80 Gew.-% Terephthalsäure- und Isophthalsäuregruppen gezogen. Die Folien wurden vor der Elektronenbestrahlung mit einer ca. 1 nm dünnen Lage Gold besputtert.

In einem Rastelektronenmikroskop (Philips SEM 501) wurde mit einem Elektronenstrahl mit einer Beschleunigungsspannung von 30 kV, Spot 2000, 2 ms Linetime, 500 Zeilen und mit 10 Durchgängen in beide Folien ein Rechteck mit den Kantenlängen 25x15 $\mu$m$^2$ eingeschrieben. Im Lichtmikroskop können in beiden Fällen die Rechtecke beobachtet werden. Bei der Vergleichsfolie konnte das Rechteck durch meachnische Beschädigung zerstört werden, während im Falle der Mischung das Rechteck auch nach mechanischer Beschädigung der Oberfläche im Lichtmikroskop sichtbar blieb.

Beispiel 4

15 g Bisphenol-A Polycarbonat wurden in 100 ml Methylenchlorid gelöst. Dazu wurde eine Lösung von 3 g Poly-(p-(carboxymethyl)-phenylen-co-p-(carboxy-tert.-butyl)-phenylen) gegeben. Die vereinigten Lösungen wurden auf ein Volumen von ca. 10-20 ml eingeengt. Auf einer Filmziehbank konnte eine transparente Folie gezogen werden.

In einem Vergleichsversuch wurde eine Folie aus Bisphenol-A-Polycarbonat gezogen.

In beiden Folien wurde mit einem Nd-YAG-Laser (Fa. Baasel Lasertechnik, Starnberg, Maximalleistung 50 W) mit einer Wellenlänge 1060 nm bei einer Geschwindigkeit von 100 mm/s, einer Frequenz von 3000 Hz und einem Strom von 17 A ein sternförmiges Muster eingeschrieben. Dieses Muster ist im Lichtmikroskop unter Polarisatoren deutlich in beiden Folien zu erkennen. In der Vergleichsfolie ist das Muster weniger stark eingeschrieben.

Beispiel 5

15 g Bisphenol-A/1,1-Bis(4-hydroxyphenyl)-3,3,5-trimethylcyclohexan (45/55) Polycarbonat wurden in 100 ml Methylenchlorid gelöst. Dazu wurde eine Lösung von 3 g Poly-(p-(carboxymethyl)-phenylen-co-p-(carboxy-tert.-butyl)-phenylen) gegeben. Die vereinigten Lösungen wurden auf ein Volumen von ca. 10-20 ml eingeengt. Auf einer Filmziehbank konnte eine transparente Folie gezogen werden.

In einem Vergleichsbeispiel wurde eine Folie aus 1,1-Bis-(4-hydroxyphenyl)-3,3,5-trimethylcyclohexan Polycarbonat gezogen.

In beiden Fällen wurde mit einem Nd-YAG-Laser (Fa. Baasel Lasertechnik, Starnberg, Maximalleistung 50 W) mit einer Wellenlänge 1060 nm bei einer Geschwindigkeit von 100 mm/s, einer Frequenz von 3000 Hz und einem Strom von 17 A ein sternförmiges Muster eingeschrieben. Dieses Muster ist im Lichtmikroskop unter Polyarisatoren deutlich in beiden Folien zu erkennen. In der Vergleichsfolie ist das Muster weniger stark eingeschrieben.

## Beispiel 6

15 g aromatisches Polyestercarbonat mit 80 Gew.-Teilen Terephthalsäure- und Isophthalsäuregruppen wurde in 100 ml Methylenchlorid gelöst. Dazu wurde eine Lösung von 3 g Poly-(p-(carboxymethyl)-phenylen-co-p-(carboxy-tert.-butyl)-phenylen) gegeben. Die vereinigten Lösungen wurden auf ein Volumen von ca. 10-20 ml eingeengt. Auf einer Filmziehbank konnte eine transparente Folie gezogen werden.

In einem Vergleichsbeispiel wurde eine Folie aus Polyestercarbonat mit 80 Gew.-Teilen Terephthalsäure- und Isophthalsäuregruppen gezogen.

In beiden Folien wurde mit einem Nd-YAG-Laser (Fa. Baasel Lasertechnik, Starnberg, Maximalleistung 50 W) mit einer Wellenlänge 1060 nm bei einer Geschwindigkeit von 100 mm/s, einer Frequenz von 3000 Hz und einem Strom von 17 A ein sternförmiges Muster eingeschrieben. Dieses Muster ist im Lichtmikroskop unter gekreuzten Polarisatoren deutlich in beiden Folien zu erkennen. In der Vergleichsfolie ist das Muster weniger stark eingeschrieben.

## Patentansprüche

1. Verwendung von transparenten, thermoplastischen Kunststoffen zur Herstellung von einmal beschreibbaren optischen Speichermedien, dadurch gekennzeichnet, daß die transparenten, thermoplastischen Kunststoffe labile Verbindungen in Mengen von 0,1 bis 25 Gew.-%, bezogen auf Gesamtgewicht an transparentem, thermoplastischem Kunststoff und labiler Verbindung, eingearbeitet enthalten, welche im Schmelzzustand der Kunststoffe unter der Einwirkung von energiereichen Strahlen im Kunststoff inerte Gase bilden.

2. Verfahren zur Herstellung von einmal besschreibbaren optischen Speichermedien aus thermoplastischen Kunststoffen, dadurch gekennzeichnet, daß man transparente, thermoplastische Kunststoffe mit einem Gehalt an labilen Verbindungen in Mengen von 0,1 bis 25 Gew.-%, bezogen auf Gesamtgewicht an transparentem, thermoplastischem Kunststoff und labiler Verbindung, in Form von beliebigen Kunststoffformkörpern mit energiereichen Strahlen in Form der gewünschten Speicherung bestrahlt.

3. Optische Speichermedien, erhältlich nach dem Verfahren des Anspruches 2.